# EUROPÄISCHE PATENTSCHRIFT

(11) **EP 1 421 251 B1**
(45) Veröffentlichungstag und Bekanntmachung des Hinweises auf die Patenterteilung: **15.07.2009**
(21) Anmeldenummer: 02767300.3
(22) Anmeldetag: 02.08.2002
(51) Int. Cl.: E06B 9/58

(54) **KÜHLGEBLÄSE, INSBESONDERE FÜR KRAFTFAHRZEUGE**
COOLING FAN, IN PARTICULAR FOR MOTOR VEHICLES
VENTILATEUR DE REFROIDISSEMENT NOTAMMENT DESTINE A DES VEHICULES

(30) Priorität: 16.08.2001 DE 10140094
(43) Veröffentlichungstag der Anmeldung: 26.05.2004
(73) Patentinhaber: ROBERT BOSCH GMBH, 70442 Stuttgart (DE)
(72) Erfinder: STRUPP, Michael, Cheongwon-gun 363-942 (KR)
(86) Internationale Anmeldenummer: PCT/EP2002/008612
(87) Internationale Veröffentlichungsnummer: WO 2003/016668

(56) Entgegenhaltungen:
- GB-A- 1 554 695
- US-A- 4 988 930
- US-A- 5 371 445
- PATENT ABSTRACTS OF JAPAN vol. 009, no. 268 (M-424), 25. Oktober 1985 (1985-10-25) & JP 60 113723 A (NIPPON DENSO KK), 20. Juni 1985 (1985-06-20)

## Beschreibung

### Stand der Technik

Die Erfindung geht aus von einem Kühlgebläse, insbesondere für Kraftfahrzeuge, nach dem Oberbegriff des Anspruchs 1.

Ein solches Kühlgebläse ist z.B. aus der JP-A-60113723 bekannt.

In Kraftfahrzeugen sind Kühlgebläse im Einsatz, die zur Deckung eines großen Kühlungsbedarfs aus mindestens zwei separaten Einzelgebläsen bestehen, die entweder zur gleichmäßigen Belüftung des Kühlers der Brennkraftmaschine oder zur getrennten Belüftung des Kühlers der Brennkraftmaschine und einer Klimaanlage innerhalb einer gemeinsamen Schaltungsanordnung betrieben werden, die eine wahlweise Einschaltung nur eines der Einzelgebläse oder beider Einzelgebläse in Reihen- oder Parallelschaltung ermöglicht.

Solche Kühlgebläse erzeugen beim Auslauf nach ihrer Abschaltung nicht unerhebliche Geräusche, da die Einzelgebläse verschiedene Resonanzfrequenzen durchlaufen, die je nach Anregung zu störenden tonalen Überhöhungen im Geräuschspektrum führen. Insbesondere bei im Leerlauf mit geringer Geräuschentwicklung laufender Brennkraftmaschine oder bei abgeschalteter Brennkraftmaschine werden die tonalen Überhöhungen als sehr unangenehm empfunden.

### Vorteile der Erfindung

Das erfindungsgemäße Kühlgebläse mit den Merkmalen des Anspruchs 1 hat den Vorteil, daß beim Abschalten der Einzelgebläse deren Antriebsmotoren unmittelbar nach dem Abschalten zumindest kurzzeitig im Kurzschluß betrieben werden, so daß der kurzgeschlossene Antriebsmotor im Generatorbetrieb arbeitet und bereits nach weniger als 20 - 30 % seiner üblichen Auslaufzeit zum Stillstand kommt. Für das Kurzschließen der Antriebsmotoren werden ausschließlich die in der Schaltungsanordnung vorhandenen Schalter und elektrischen Leitungen benutzt, die ohnehin für die bloße Ein- und Auschaltfunktion sowie für die Reihen- und Parallelschaltfunktion vorhanden sind. Damit sind für das Kurzschließen der Antriebsmotoren im Zuge ihrer Abschaltung keine zusätzlichen Bauelemente erforderlich, und die Geräuschunterdrückung wird kostenmäßig quasi zum Nulltarif erreicht. Lediglich die von einem Steuergerät programmäßig durchgeführte Ansteuerung der Schalter beim Abschalten der Einzelgebläse muß modifiziert werden, was durch eine kostenmäßig nicht ins Gewicht fallende Änderung der Software erreichbar ist.

Durch die in den weiteren Ansprüchen aufgeführten Maßnahmen sind vorteilhafte Weiterbildungen und Verbesserungen des im Anspruch 1 angegebenen Kühlgebläses möglich.

Gemäß einer bevorzugten Ausführungsform der Erfindung sind n vorhandene Antriebsmotoren in n parallelen Stromzweigen angeordnet, wobei n eine ganze Zahl größer Eins ist. Das von den n parallelen Stromzweigen gebildete Netzwerk ist über einen als Schließer mit einem aktiven Schaltkontakt ausgebildeten Schalter an einer Spannungsquelle angeschlossen. Zusätzlich sind für den Einzelbetrieb der n Antriebsmotoren in n-1 parallelen Stromzweigen jeweils ein als Öffner mit einem aktiven Schaltkontakt ausgebildeter Schalter in Reihe mit dem jeweiligen Antriebsmotor angeordnet. Durch diese schaltungstechnischen Maßnahmen erfolgt die Ein- und Ausschaltung von ausgewählten Antriebsmotoren durch Schließen und Öffnen des Schließers, während die Auswahl der in Betrieb genommenen Antriebsmotoren durch Betätigen der Öffner erfolgt. Wird ein Öffner in einem parallelen Zweig geöffnet, so wird der zugeordnete Antriebsmotor aus der gemeinsamen Ansteuerung durch den Schließer herausgenommen.

Für die Reihenschaltung der n Antriebsmotoren sind gemäß einer vorteilhaften Ausführungsform der Erfindung in n-1 parallelen Stromzweigen jeweils ein als Umschalter mit zwei aktiven Schaltkontakten ausgebildeter Schalter angeordnet. Der Umschalter ist jeweils auf der vom Öffner abgekehrten Anschlußseite des Antriebsmotors angeordnet, wobei der erste Schaltkontakt des Umschalters im Stromzweig liegt und der zweite Schaltkontakt an der Verbindung zwischen Öffner und Antriebsmotor im benachbarten Stromzweig angeschlossen ist. Dabei ist in dem ersten der n parallelen Stromzweige nur ein Umschalter und in dem letzten der parallelen Stromzweige nur ein Öffner vorhanden, wobei der eine auf der Hochpotentialseite und der andere auf der Niederpotentialseite des jeweils zugeordneten Antriebsmotors liegt. Diese Schaltungsausführung bringt Vorteile hinsichtlich Drehzahlregulierung der Einzelgebläse und Einstellung der Kühlleistung.

Da der Serienbetrieb von zwei Einzelgebläsen in der Regel ausreichend ist, ist gemäß einer vorteilhaften Ausführungsform der Erfindung für die Reihenschaltung von jeweils zwei der n-Antriebsmotoren mit der Möglichkeit, die Reihenschaltungen von jeweils zwei Antriebsmotoren parallel zu betreiben, in jedem vom Schließer aus gezählten ungeradzahligen parallelen Stromzweig ein als Umschalter mit zwei aktiven Schaltkontakten ausgebildeter Schalter auf der vom Öffner abgekehrten Anschlußseite des Antriebsmotors angeordnet, dessen erster Schaltkontakt im Stromzweig liegt und dessen zweiter Schaltkontakt an der Verbindung zwischen dem Öffner und dem Antriebsmotor im folgenden geradzahligen parallelen Stromzweig angeschlossen ist. Bei dieser Schaltungsausführung läßt sich ein Kostenvorteil insofern erzielen, als in jedem zweiten Stromzweig ein Umschalter eingespart werden kann.

Die der wahlweisen Herbeiführung einer Reihen- oder Parallelschaltung der Antriebsmotoren dienenden Umschalter werden gemäß einer vorteilhaften Ausführungsform der Erfindung auch zum temporären Kurzschluß des jeweils im gleichen parallelen Stromzweig liegenden Antriebsmotors herangezogen, indem durch Umschalten auf den zweiten Schaltkontakt über den Umschalter und den in Schließstellung sich befindlichen Öffner im benachbarten, parallelen Stromzweig eine Kurzschlußverbindung hergestellt wird. Der im letzten parallelen Stromzweig nur in Reihe mit einem Öffner angeordnete Antriebsmotor wird beim Öffnen des Schließers zwecks Abschaltung der Antriebsmotore nach Zurückschalten mindestens eines der Umschalter auf seinen ersten Schaltkontakt über den mit diesem Umschalter in Reihe liegenden Antriebsmotor und den mit ihm im Stromzweig in Reihe liegenden, geschlossenen Öffner kurzgeschlossen.

Gemäß einer vorteilhaften Ausführungsform der Erfindung ist ein Steuergerät vorgesehen, das zum Ein- und Ausschalten der Antriebsmotoren und der Herbeiführung der Reihen- und Parallelschaltung die Schalter nach einem vorgegebenen Programm zu deren Umschaltung ansteuert. Bei abgeschalteten Antriebsmotoren sind die Schalter derart gesteuert, daß der Schließer seine Offenstellung und die Öffner ihre Schließstellung einnehmen und die Umschalter auf ihre ersten Schaltkontakte aufgeschaltet sind. Zum Abschalten der im Betrieb befindlichen Antriebsmotoren werden die Schalter so angesteuert, daß der Schließer öffnet, die Öffner in ihre Schließstellung überführt und die Umschalter temporär auf ihren zweiten Schaltkontakt aufgeschaltet werden.

### Zeichnung

Die Erfindung ist anhand von in der Zeichnung dargestellten Ausführungsbeispielen in der nachfolgenden Beschreibung näher erläutert. Es zeigen:
- Fig. 1: eine Schaltbild eines Kühlgebläses mit zwei in einer Schaltungsanordnung betriebenen Einzelgebläsen,
- Fig. 2: eine Darstellung des Steuerprogramms zur Ansteuerung der Schalter in der Schaltungsanordnung gemäß Fig. 1,
- Fig. 3: ein modifiziertes Schaltbild eines Kühlgebläses mit zwei Einzelgebläsen,
- Fig. 4: ein Schaltbild eines Kühlgebläses mit drei Einzelgebläsen,
- Fig. 5: ein Schaltbild eines Kühlgebläses mit vier Einzelgebläsen.

### Beschreibung der Ausführungsbeispiele

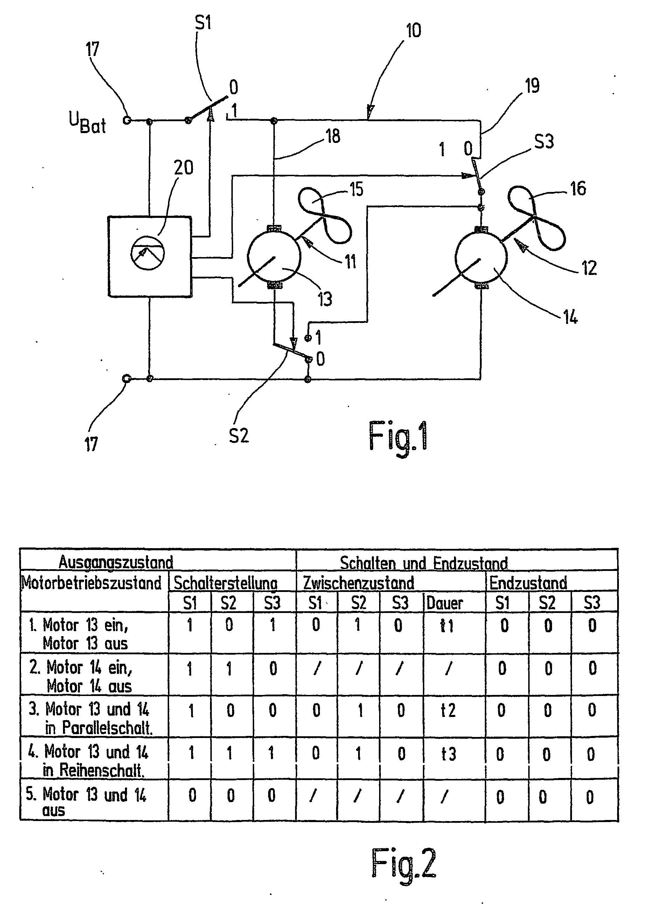

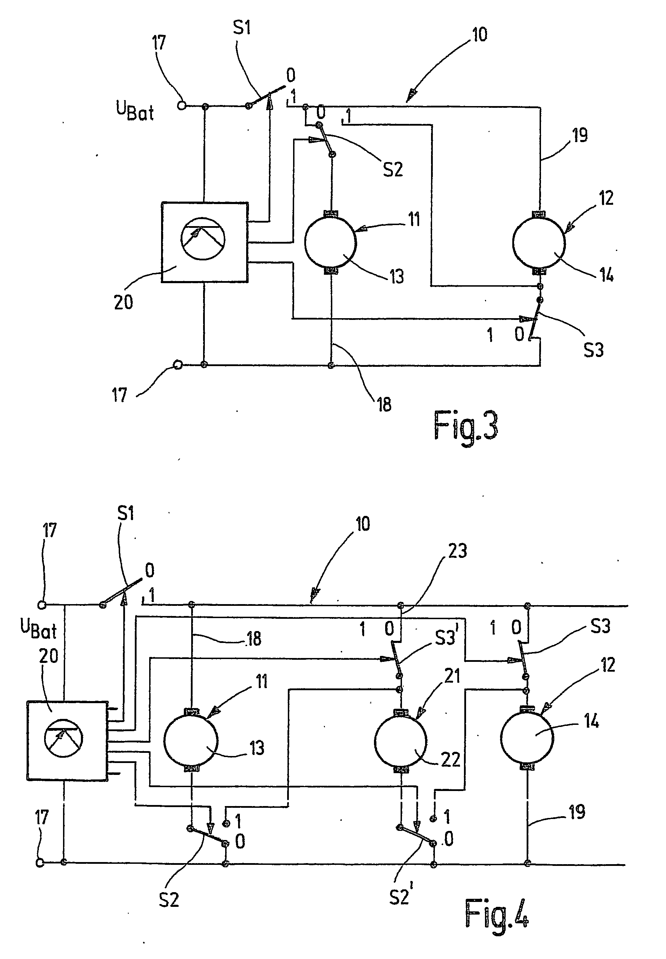

Das in Fig. 1 und 3 als Schaltbild dargestellte Kühlgebläse weist zwei Einzelgebläse 11, 12 mit jeweils einem von einem elektrischen Antriebsmotor 13 bzw. 14 angetriebenen Gebläserad 15 bzw. 16 auf. Die als Gleichstrommotoren ausgebildeten Antriebsmotoren 13, 14 sind in einer mehrere Schalter aufweisenden Schaltungsanordnung 10 so integriert, daß sie durch entsprechende Betätigung der Schalter an eine Spannungsquelle 17 anschließbar und von dieser trennbar sind, wobei die beiden Antriebsmotoren 13, 14 einzeln oder zusammen in Reihen- oder Parallelschaltung betrieben werden können. Die Schalter werden von einem elektronischen Steuergerät 20 geschaltet, das nach einem vorgegebenen Programm entsprechende Steuersignale an die Schalter zu deren Umsteuerung legt.

Die Schaltungsanordnung 10 für die beiden Antriebsmotoren 13, 14 weist in Fig. 1 insgesamt drei Schalter auf, von denen der eine Schalter als Schließer S1 mit einem aktiven Schaltkontakt, der andere Schalter als Öffner S3 mit einem aktiven Schaltkontakt und der weitere Schalter als Umschalter S2 mit zwei aktiven Schaltkontakten ausgebildet ist. Jeder Schalter hat zwei Schalterstellungen 0 und 1, wobei die drei Schalter S1 - S3 so ausgebildet sind, daß sie im nichtangesteuerten Zustand ihre Schalterstellung 0 einnehmen, in der der Schließer S1 geöffnet, der Öffner S3 geschlossen und der Umschalter S2 auf den ersten der beiden aktiven Schaltkontakte aufgeschaltet ist.

Die beiden Antriebsmotoren 13, 14 sind in zwei parallelen Stromzweigen 18 und 19 angeordnet, die gemeinsam über den Schließer S1 an der Spannungsquelle 17 angeschlossen sind. Im Stromzweig 19 ist in Reihe mit dem Antriebsmotor 14 der Öffner S3 angeordnet, während im Stromzweig 18 der Umschalter S2 mit dem Antriebsmotor 13 in Reihe liegt. Dabei ist der erste Schaltkontakt des Umschalter S2 im Stromzweig 18 angeordnet, so daß bei Aufschalten des Umschalter S2 auf den ersten Schaltkontakt (Schalterstellung 0) der Stromzweig 18 geschlossen ist. Der zweite aktive Schaltkontakt des Umschalters S2 ist an der Verbindung zwischen dem Öffner S3 und dem Antriebsmotor 14 im Stromzweig 19 angeschlossen. Der Umschalter S2 liegt im Stromzweig 18 auf der Niederpotentialseite des Antriebsmotors 13, also masseseitig, währen der Öffner S3 im Stromzweig 19 auf der Hochpotentialseite des Antriebsmotors 13 angeordnet ist und beim Schließen des Schließers S1 damit an das Gleichspannungspotential U_{Bat} der Spannungsquelle 17 gelegt wird.

Es ist möglich, in den parallenen Stromzweigen 18, 19 die Anordnung der Schalter S2 und S3 bezüglich der Antriebsmotoren 13 bzw. 14 zu vertauschen, so daß - wie dies in der modifizierten Schaltungsanordnung in Fig. 3 dargestellt ist - der Umschalter S2 auf der Hochpotentialseite des Antriebsmotors 13 und der Öffner S3 auf der Niederpotentialseite des Antriebsmotors 14 liegt.

Die Ansteuerung der Schalter S1, S2 und S3 erfolgt durch das Steuergerät 20 nach dem in Fig. 2 tabellarisch dargestellten Steuerprogramm. Dabei wird mittels einer im Steuergerät 20 integrierten Steuerlogik aufgrund von Betriebsdaten ausgewählt, ob lediglich der Antriebsmotor 13 oder der Antriebsmotor 14 oder beide Antriebsmotoren 13, 14 in Parallel- oder Reihenschaltung in Betrieb genommen werden.

Bei ausgeschaltetem Kühlgebläse nehmen alle Schalter S1, S2 und S3 ihre Schalterstellung 0 ein, wie sie in Fig. 1 eingezeichnet ist. Grundsätzlich dient der Schließer S1 dazu die elektrische Verbindung zu der Spannungsquelle 17 herzustellen. Mit dem Öffner S3 und dem Umschalter S2 wird bestimmt, ob das Einzelgebläse 11 oder das Einzelgebläse 12 in Betrieb genommen wird oder beide Gebläse 11 und 12 in Reihen oder in Parallelschaltung betrieben werden.

Soll nur das Einzelgebläse 11 mit dem Antriebsmotor 13 eingeschaltet werden, so wird ausweislich der ersten Programmzeile in Fig. 2 von dem Steuergerät 20 der Schließer S1 geschlossen und der Öffner S3 geöffnet. Zum Abschalten wird der Schließer S1 wieder geöffnet und der Öffner S3 wieder geschlossen sowie der Umschalter S2 für eine Zeitspanne t1 auf seinen zweiten Schaltkontakt (Schalterstellung 1) umgeschaltet. Dadurch ist der Antriebsmotor 13 über den Umschalter S2 und den Öffner S3 kurzgeschlossen, so daß er in kurzer Zeit zum Stillstand kommt. Nach Ablauf der Zeitspanne t1 wird der Umschalter S2 wieder auf seinen ersten Schaltkontakt aufgeschaltet. Alle Schalter S1, S2 und S3 nehmen ihre Grundstellung ein, die in Fig. 2 mit "Endzustand" bezeichnet ist.

Soll nur das Einzelgebläse 12 eingeschaltet werden, so werden gemäß zweiter Programmzeile in Fig. 2 von dem Steuergerät 20 der Schließer S1 und der Umschalter S2 so angesteuert, daß der Schließer S1 schließt und der Umschalter S2 auf seinen zweiten Schaltkontakt aufschaltet. Damit ist nur der Antriebsmotor 14 an die Spannungsquelle 17 angeschlossen. Zum Wiederabschalten des Antriebsmotors 14 werden die beiden Schalter S1 und S2 wieder in ihre Grundstellung zurückgeführt. Dadurch wird der abgeschaltete Antriebsmotor 14 über den geschlossenen Öffner S3, den Antriebsmotor 13 und den in Schalterstellung 0 stehenden Umschalter S2 kurzgeschlossen und in kürzester Zeit abgebremst.

Sollen beide Einzelgebläse 11, 12 gleichzeitig in Betrieb genommen werden und dabei ihre elektrischen Antriebsmotoren 13, 14 in Parallelschaltung arbeiten, so wird gemäß der dritten Programmzeile in Fig. 2 nur der Schließer S1 geschlossen. Die beiden Antriebsmotoren 13, 14 sind damit parallel an der Spannungsquelle 17 angeschlossen. Zum Abschalten der beiden in Betrieb genommenen Antriebsmotoren 13, 14 wird der Schließer S1 geöffnet und der Umschalter S2 für die Dauer t2 auf seinen zweiten Schaltkontakt (Schalterstellung 1) aufgeschaltet. Dadurch ist der Antriebsmotor 13 über den Umschalter S2 und den in seiner Schließstellung sich befindlichen Öffner S3 kurzgeschlossen und wird in kurzer Zeit abgebremst. Nach der Zeit t2 wird der Umschalter S2 in seine Schalterstellung 0 mit Kontaktierung seines ersten Schaltkontakts umgelegt. Damit wird der auslaufende Antriebsmotor 14 über den Öffner S3, den Antriebsmotor 13 und den Umschalter S2 ebenfalls kurzgeschlossen und abgebremst.

Sollen beide Einzelgebläse 11, 12 in Betrieb genommen werden, dabei aber die Antriebsmotoren 13, 14 in Reihenschaltung betrieben werden müssen , so werden gemäß der vierten Programmzeile in Fig. 2 alle Schalter S1, S2 und S3 von dem Steuergerät 20 zur Umschaltung angesteuert. Der Schließer S1 schließt, der Umschalter S2 wird auf seinen zweiten Schaltkontakt umgeschaltet und der Öffner S3 öffnet. Die Antriebsmotoren 13, 14 sind nunmehr bei geschlossenem Schließer S1 über den Umschalter S2 in Reihe zu der Spannungsquelle 17 geschaltet. Müssen die in Betrieb genommen Einzelgebläse 11, 12 wieder abgeschaltet werden, so werden zunächst der Schließer S1 und der Öffner S3 so angesteuert, daß der Schließer S1 öffnet und der Öffner S3 schließt. Der Antriebsmotor 13 ist damit wiederum über den Umschalter S2 und den Öffner S3 kurzgeschlossen-und kommt in kurzer Zeit zum Stillstand. Nach einer Zeitspanne t3 wird der Umschalter S2 wiederum von der Steuerelektronik 20 angesteuert und in seine Schalterstellung 0 zurückgesetzt, in welcher er seinen ersten Schaltkontakt kontaktiert. Nunmehr ist der Antriebsmotor 14 über den Öffner S3, den Antriebsmotor 13 und den Umschalter S2 kurzgeschlossen.

In dem Ausführungsbeispiel des Kühlgebläses gemäß Fig. 4 ist das Kühlgebläse mit einem dritten Einzelgebläse 21 ausgestattet, dessen elektrischer Antriebsmotor 22 in einem weiteren parallelen Stromzweig 23 in Reihe mit einem weiteren Öffner S3' und einem weiteren Umschalter S2' angeordnet ist. Der Anschluß des zweiten Schaltkontaktes des Umschalters S2 am Stromzweig 19 ist aufgehoben und statt dessen der zweite Schaltkontakt des weiteren Umschalters S2' an der Verbindung zwischen dem Öffner S3 und dem Antriebsmotor 14 im Stromzweig 19 angeschlossen. Der zweite Schaltkontakt des Umschalters S2 ist an die Verbindung zwischen dem weiteren Öffner S3' und dem Antriebsmotor 22 im Stromzweig 23 gelegt.

Selbstverständlich können in die Schaltungsanordnung 10 gemäß Fig. 4 noch weitere parallele Stromzweige mit je einem Antriebsmotor zwischen den Stromzweigen 18 und 19 in gleicher Weise wie der Stromzweig 23 angeordnet werden. Jeder weitere Stromzweig ist identisch dem Stromzweig 23 ausgebildet. Bei dieser Schaltungsanordnung 10 können dann alle n Antriebsmotoren einzeln oder gemeinsam in Parallel- oder Reihenschaltung betrieben werden, wobei n eine ganze Zahl größer eins ist. Beim Abschalten der jeweils in Betrieb genommenen Antriebsmotoren werden die Antriebsmotoren mit Öffnen des für alle Antriebsmotoren gemeinsamen Schließers 11 temporär und entsprechendes Umschalten der Öffner S3, S3' bzw. der Umschalter S2, S2'kurzgeschlossen und abgebremst, so daß die kritischen Resonanzfrequenzen der Enzelgebläse 11, 12, 21 sehr schnell durchfahren werden.

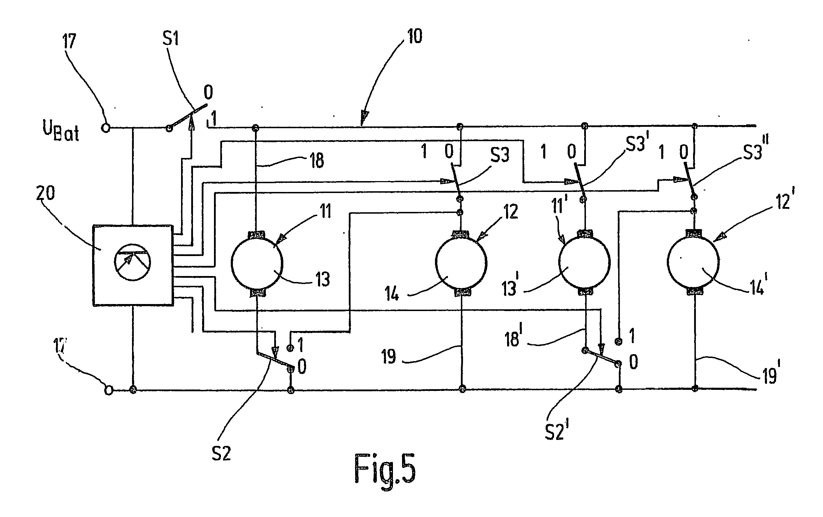

In dem Ausführungsbeispiel des Kühlgebläses gemäß Fig. 5 ist das Kühlgebläse mit insgesamt vier Einzelgebläsen 11, 12 und 11' und 12' ausgestattet. Die gegenüber Fig. 2 zusätzlichen beiden Einzelgebläsen 11', 12' sind wiederum mit ihren Antriebsmotoren 13' und 14' in parallelen Stromzweigen 18' und 19' der Schaltungsanordnung 10 angeordnet, wobei der Antriebsmotor 14' in gleicher Weise wie der Antriebsmotor 14 in Reihe mit einem Öffner S3" und der Antriebsmotor 13' in gleicher Weise wie der Antriebsmotor 13 mit einem Umschalter S2' in Reihe geschaltet ist, dessen zweiter aktiver Schaltkontakt "1" an die Verbindung zwischen dem Öffner S3" und dem Antriebsmotor 14' im Stromzweig 19' angeschlossen ist. Zusätzlich ist im Stromkreis 18' dem Antriebsmotor 13' wiederum ein Öffner S3' vorgeschaltet. Die neu hinzugekommenen drei Schalter S3', S3" und S2' werden wiederum von dem Steuergerät 20 angesteuert.

In der in Fig. 5 dargestellten Schaltungsanordnung können alle vier Antriebsmotoren 13, 14, 13', 14' parallel oder einzeln betrieben werden. Des weiteren können die Antriebsmotoren 13 und 14 sowie die Antriebsmotoren 13' und 14' jeweils in Reihenschaltung betrieben werden. Zusätzlich können die beiden Reihenschaltungen von jeweils zwei Antriebsmotoren 13 und 14 sowie 13' und 14' parallel betrieben werden. Je nach Betriebsart werden von dem Steuergerät 20 bei geschlossenem Schließer S1 die übrigen Schalter in der erforderlichen Weise angesteuert. Beim Abschalten der jeweils im Betrieb genommenen Antriebsmotoren werden die Antriebsmotoren mit Öffnen des für alle Antriebsmotoren gemeinsamen Schließers 11 und entsprechendem Umschalten der Öffner S3, S3', S3" und Umschalter S2, S2' temporär kurzgeschlossen und damit abgebremst, so daß die kritischen Resonanzfrequenzen der Einzelgebläse sehr schnell durchfahren werden. Zum Kurzschließen der einzelnen Motoren müssen die Schalter S2 und S3 wie zur Fig. 1 beschrieben und die Schalter S3', S3" und S2' analog betätigt werden.

Auch in der Schaltungsanordnung 10 gemäß Fig. 5 können weitere parallele Stromzweige mit je einem Antriebsmotor vorgesehen werden, wobei die Einbindung der Antriebsmotoren und Öffner und Umschalter identisch zu den parallelen Stromzweigen 18' und 19' ausgeführt werden. Bei n Antriebsmotoren in n parallelen Stromzweigen sind somit in jedem vom Schließer S1 aus gezählten ungeradzahligen Stromzweigen ein Umschalter und ein Öffner und in jedem geradzahligen Stromzweig nur ein Öffner in Reihe mit dem jeweiligen Antriebsmotor geschaltet. Die Zahl n der möglichen Antriebsmotoren ist geradzahlig.

## Patentansprüche

1. Kühlgebläse, insbesondere für Kraftfahrzeuge, mit mehreren, jeweils einen elektrischen Antriebsmotor (13, 14; 13, 14, 22; 13, 14, 13', 14') aufweisenden Einzelgebläsen (11, 12; 11, 12, 21; 11, 12, 11', 12') und mit einer mehrere, jeweils in zwei Schalterstellungen (0,1) umschaltbare Schalter (S1, S2, S3; S1, S2, S3, S2', S3'; S1, S2, S3, S2', S3', S3") aufweisenden Schaltungsanordnung (10), mittels der die Antriebsmotoren (13, 14; 13, 14, 22; 13, 14, 13', 14') einzeln oder wahlweise in Reihen- oder Parallelschaltung einschaltbar und wieder abschaltbar sind, **gekennzeichnet durch** Mittel**,** die beim Abschalten des oder der in Betrieb genommenen Antriebsmotoren (13, 14; 13, 14, 22; 13, 14, 13', 14') die Schalter (S1, S2, S3; S1, S2, S3, S2', S3'; S1, S2, S3, S2', S3', S3") in solche Schalterstellungen zwangsüberführen, die ein Kurzschließen des oder der abgeschalteten Antriebsmotoren (13, 14; 13, 14, 22; 13, 14, 13', 14') bewirken.

2. Kühlgebläse nach Anspruch 1, **dadurch gekennzeichnet, daß** das Kurzschließen der Antriebsmotoren (13, 14; 13, 14, 22; 13, 14, 13', 14') ausschließlich mit denjenigen Schaltern (S1, S2, S3; S1, S2, S3, S2', S3'; S1, S2, S3, S2', S3', S3") und denjenigen Leitungsverbindungen der Schaltungsanordnung herbeigeführt ist, die für das Ein- und Ausschalten und Reihen- und Parallelschalten der Antriebsmotoren (13, 14; 13, 14, 22; 13, 14, 13', 14') vorhanden sind.

3. Kühlgebläse nach Anspruch 1 oder 2, **dadurch gekennzeichnet, daß** zum Ein- und Ausschalten von n Antriebsmotoren (13, 14; 13, 14, 21; 13, 14, 13', 14') diese in n parallelen Stromzweigen (18, 19; 18, 19, 23; 18, 19, 18', 19') angeordnet sind, die gemeinsam.über einen als Schließer (S1) mit einem aktiven Schaltkontakt ausgebildeten Schalter an einer Spannungsquelle (17) angeschlossen sind, wobei n eine ganze Zahl größer Eins ist.

4. Kühlgebläse nach Anspruch 3, **dadurch gekennzeichnet, daß** für den Einzelbetrieb der n Antriebsmotoren (13, 14; 13, 14, 22; 13, 14, 13', 14') in n-1 parallelen Stromzweigen (18, 19; 18, 19, 23; 18, 19, 18', 19') jeweils ein als Öffner (S3; S3, S3'; s3, s3', S3") mit einem aktiven Schaltkontakt ausgebildeter Schalter in Reihe mit dem Antriebsmotor (13, 14; 13, 14, 21; 13, 14, 13', 14') angeordnet ist.

5. Kühlgebläse nach Anspruch 4, **dadurch gekennzeichnet, daß** für die Reihenschaltung der n Antriebsmotoren (13, 14, 22) in n-1 parallelen Stromzweigen (18, 19, 23) jeweils ein als Umschalter (S2, S2') mit zwei aktiven Schaltkontakten ausgebildeter Schalter auf der vom Öffner (S3', S3) abgekehrten Anschlußseite des Antriebsmotors (13, 22) angeordnet ist, dessen erster Schaltkontakt im Stromzweig (18, 23) liegt und dessen zweiter Schaltkontakt an der Verbindung zwischen Öffner (S3', S3) und dem Antriebsmotor (22, 14) im folgenden Stromzweig (23, 19) angeschlossen ist.

6. Kühlgebläse nach Anspruch 5, **dadurch gekennzeichnet, daß** in dem ersten der n parallelen Stromzweigen (18) nur ein Umschalter (S2) und in dem letzten der parallelen Stromzweige (19) nur ein Öffner (S3) angeordnet ist, wobei der eine auf der Hochpotentialseite und der andere auf der Niederpotentialseite des jeweils zugeordneten Antriebsmotors (13, 14) liegt.

7. Kühlgebläse nach Anspruch 4, **dadurch gekennzeichnet, daß** für die Reihenschaltung von jeweils zwei der n Antriebsmotoren (13, 14, 13', 14') in jedem vom Schließer (S1) aus gezählten, ungeradzahligen parallelen Stromzweig (18, 18') ein als Umschalter (S2, S2') mit zwei aktiven Schaltkontakten ausgebildeter Schalter auf der vom Öffner (S3, S3', S3") abgekehrten Anschlußseite des Antriebsmotors (13, 13') angeordnet ist, dessen erster Schaltkontakt im Stromzweig (18, 18') liegt und dessen zweiter Schaltkontakt an der Verbindung zwischen dem Öffner (S3, S3') und dem Antriebsmotor (14, 14') im folgenden, geradzahligen parallelen Stromzweig (19, 19') angeschlossen ist.

8. Kühlgebläse nach Anspruch 1 oder 2, **dadurch gekennzeichnet, daß** bei zwei Antriebsmotoren (13, 14) die Schaltungsanordnung (10) drei Schalter aufweist, von denen einer als Schließer (S1) und einer als Öffner (S3) mit jeweils einem aktiven Schaltkontakt und einer als Umschalter (S2) mit zwei aktiven Schaltkontakten ausgebildet ist, daß die beiden Antriebsmotoren (13, 14) in zwei parallelen Stromzweigen (18, 19) angeordnet sind, die gemeinsam über den Schließer (S1) an einer Spannungsquelle (17) angeschlossen sind, daß der Öffner (S3) in Reihe mit dem einen Antriebsmotor (14) und der Umschalter (S2) in Reihe mit dem anderen Antriebsmotor (13) in je einem der parallelen Stromzweige (19, 18) liegt, wobei jeweils einer der beiden Schalter auf der Hochpotentialseite und der andere auf der Niederpotentialseite des zugeordneten Antriebsmotors (14, 13) liegt, und daß von den beiden Schaltkontakten des Umschalters (S2) der erste im Stromzweig (18) -angeordnet und der zweite an der Verbindung zwischen dem Öffner (S3) und dem zugeordneten Antriebsmotor (14) angeschlossen ist.

9. Kühlgebläse nach einem der Ansprüche 1 - 8, **dadurch gekennzeichnet, daß** ein Steuergerät (20) vorgesehen ist, das zum Ein- und Ausschalten der Antriebsmotoren (13,14; 13, 14, 22; 13, 13', 14, 14') und zu deren wahlweisen Parallel- oder Reihenschaltung die Schalter (S1, S2, S3; S1, S2, S3, S2', S3'; S1, S2, S3, S2', S3', S3") nach einem vorgegebenen Programm zu deren Umschaltung ansteuert.

10. Kühlgebläse nach Anspruch 9, **dadurch gekennzeichnet, daß** bei abgeschalteten Antriebsmotoren (13, 14; 13, 14, 22; 13, 14, 13', 14') der Schließer (S1) seine Offenstellung und die Öffner (S3; S3, S3'; S3, S3', S3") ihre Schließstellung einnehmen und die Umschalter (S2; S2, S2'; S2, S2') auf ihre ersten Schaltkontakte aufgeschaltet sind.

11. Kühlgebläse nach Anspruch 9 oder 10, **dadurch gekennzeichnet, daß** mit Abschalten der in Betrieb befindlichen Antriebsmotoren (13, 14; 13, 14, 22) durch Öffnen des Schließers (S1) die Öffner (S3; S3, S3'; S3, S3', S3") in ihre Schließstellung überführt und die Umschalter (S2; S2, S2'; S2, S2') temporär auf ihren zweiten Schaltkontakt aufgeschaltet werden.

## Claims

1. Cooling fan, in particular for motor vehicles, having a plurality of individual fans (11, 12; 11, 12, 21; 11, 12, 11', 12'), which each have an electric drive motor (13, 14; 13, 14, 22; 13, 14, 13', 14'), and having a circuit arrangement (10) which has a plurality of switches (S1, S2, S3; S1, S2, S3, S2', S3'; S1, S2, S3, S2', S3', S3''), which can each be switched over to two switch positions (0, 1), and by means of which circuit arrangement the drive motors (13, 14; 13, 14, 22; 13, 14, 13', 14') can be switched on and switched off again individually or selectively in series or in parallel, **characterized by** means which, when the commissioned drive motor or motors (13, 14; 13, 14, 22; 13, 14, 13', 14') are/is switched off, forcibly move the switches (S1, S2, S3; S1, S2, S3, S2', S3'; S1, S2, S3, S2', S3', S3'') to such switch positions which short-circuit the switched-off drive motor or motors (13, 14; 13, 14, 22; 13, 14, 13', 14').

2. Cooling fan according to Claim 1, **characterized in that** the drive motors (13, 14; 13, 14, 22; 13, 14, 13', 14') are short-circuited solely by those switches (S1, S2, S3; S1, S2, S3, S2', S3'; S1, S2, S3, S2', S3', S3'') and those line connections of the circuit arrangement which are provided for switching on and switching off the drive motors (13, 14; 13, 14, 22; 13, 14, 13', 14') and connecting said drive motors in series or in parallel.

3. Cooling fan according to Claim 1 or 2, **characterized in that,** in order to switch on and switch off n drive motors (13, 14; 13, 14, 22; 13, 14, 13', 14'), said drive motors are arranged in n parallel current paths (18, 19; 18, 19, 23; 18, 19, 18', 19') which are jointly connected to a voltage source (17) via a switch which is in the form of a normally open contact (S1) with an active switching contact, where n is an integer greater than one.

4. Cooling fan according to Claim 3, **characterized in that,** for individual operation of the n drive motors (13, 14; 13, 14, 22; 13, 14, 13', 14') in n-1 parallel current paths (18, 19; 18, 19, 23; 18, 19, 18', 19'), in each case one switch, which is in the form of a normally closed contact (S3; S3, S3'; S3, S3', S3'') with an active switching contact, is arranged in series with the drive motor (13, 14; 13, 14, 22; 13, 14, 13', 14').

5. Cooling fan according to Claim 4, **characterized in that,** for connecting the n drive motors (13, 14, 22) in series in n-1 parallel current paths (18, 19, 23), in each case one switch, which is in the form of a changeover switch (S2, S2') with two active switching contacts, is arranged on that connection side of the drive motor (13, 22) which is averted from the normally closed contact (S3', S3), the first switching contact of said changeover switch being situated in the current path (18, 23) and the second switching contact of said changeover switch being connected to the connection between the normally closed contact (S3', S3) and the drive motor (22, 14) in the following current path (23, 19).

6. Cooling fan according to Claim 5, **characterized in that** only one changeover switch (S2) is arranged in the first of the n parallel current paths (18) and only one normally closed contact (S3) is arranged in the last of the parallel current paths (19), with one being situated on the high-potential side and the other being situated on the low-potential side of the respectively associated drive motor (13, 14).

7. Cooling fan according to Claim 4, **characterized in that,** for connecting in each case two of the n drive motors (13, 14, 13', 14') in series in each odd-numbered parallel current path (18, 18'), counted from the normally open contact (S1), a switch, which is in the form of a changeover switch (S2, S2') with two active switching contacts, is arranged on that connection side of the drive motor (13, 13') which is averted from the normally closed contact (S3, S3', S3''), the first switching contact of said changeover switch being situated in the current path (18, 18') and the second switching contact of said changeover switch being connected to the connection between the normally closed contact (S3, S3') and the drive motor (14, 14') in the following, even-numbered parallel current path (19, 19').

8. Cooling fan according to Claim 1 or 2, **characterized in that,** when there are two drive motors (13, 14), the circuit arrangement (10) has three switches, of which one is in the form of a normally open contact (S1) and one is in the form of a normally closed contact (S3), in each case with one active switching contact, and one is in the form of a changeover switch (S2) with two active switching contacts, **in that** the two drive motors (13, 14) are arranged in two parallel current paths (18, 19) which are jointly connected to a voltage source (17) via the normally open contact (S1), **in that** the normally closed contact (S3) is connected in series with one drive motor (14) and the changeover switch (S2) is connected in series with the other drive motor (13) in each case in one of the parallel current paths (19, 18), with one of the two switches in each case being situated on the high-potential side and the other being situated on the low-potential side of the associated drive motor (14, 13), and **in that** the first of the two switching contacts of the changeover switch (S2) is arranged in the current path (18) and the second of the two switching contacts of the changeover switch (S2) is connected to the connection between the normally closed contact (S3) and the associated drive motor (14).

9. Cooling fan according to one of Claims 1-8, **characterized in that** a controller (20) is provided, which controller, in order to switch on and switch off the drive motors (13, 14; 13, 14, 22; 13, 13', 14, 14') and to selectively connect said drive motors in parallel or in series, drives the switches (S1, S2, S3; S1, S2, S3, S2', S3'; S1, S2, S3, S2', S3', S3''), in order to change them over, in accordance with a predefined program.

10. Cooling fan according to Claim 9, **characterized in that,** when the drive motors (13, 14; 13, 14, 22; 13, 14, 13', 14') are switched off, the normally open contact (S1) assumes its open position and the normally closed contact (S3; S3, S3'; S3, S3', S3'') assumes its closed position, and the changeover switches (S2; S2, S2'; S2, S2') are connected to their first switching contacts.

11. Cooling fan according to Claim 9 or 10, **characterized in that,** when the operating drive motors (13, 14; 13, 14, 22) are switched off by the normally open contact (S1) opening, the normally closed contact (S3; S3, S3'; S3, S3', S3'') is moved to its closed position and the changeover switches (S2; S2, S2'; S2, S2') are temporarily connected to their second switching contact.

## Revendications

1. Ventilateur de refroidissement, notamment destiné à des véhicules automobiles, avec plusieurs ventilateurs individuels (11, 12; 11, 12, 21; 11, 12, 11', 12') présentant respectivement un moteur électrique d'entraînement (13, 14; 13, 14, 22; 13, 14, 13', 14') et avec un circuit (10) comprenant plusieurs interrupteurs (S1, S2, S3; S1, S2, S3, S2', S3'; S1, S2, S3, S2', S3', S3") commutables chaque fois dans deux positions de commutation (0, 1), au moyen duquel les moteurs d'entraînement (13, 14; 13, 14, 22; 13, 14, 13', 14') peuvent être connectés et de nouveau déconnectés individuellement ou au choix en série ou en parallèle, **caractérisé par** des moyens qui, lors de la déconnexion du ou des moteurs d'entraînement (13, 14; 13, 14, 22; 13, 14, 13', 14') mis en service transfèrent de force les interrupteurs (S1, S2, S3; S1, S2, S3, S2', S3'; S1, S2, S3, S2', S3', S3") dans des positions de commutation qui provoquent une mise en court-circuit du ou des moteurs d'entraînement (13, 14; 13, 14, 22; 13, 14, 13', 14') déconnectés.

2. Ventilateur de refroidissement selon la revendication 1, **caractérisé en ce que** la mise en court-circuit des moteurs d'entraînement (13, 14; 13, 14, 22; 13, 14, 13', 14') est effectuée exclusivement avec les interrupteurs S1, S2, S3; S1, S2, S3, S2', S3'; S1, S2, S3, S2', S3', S3") et les conducteurs du circuit, qui sont présents pour la connexion et la déconnexion et pour le montage en série et en parallèle des moteurs d'entraînement (13, 14; 13, 14, 22; 13, 14, 13', 14').

3. Ventilateur de refroidissement selon la revendication 1 ou 2, **caractérisé en ce que,** pour connecter et déconnecter n moteurs d'entraînement (13, 14; 13, 14, 22; 13, 14, 13' 14'), ceux-ci sont disposés dans n branches électriques parallèles (18, 19; 18, 19, 23; 18, 19, 18', 19'), qui sont raccordées en commun à une source de tension (17) au moyen d'un interrupteur réalisé en forme de contact à fermeture (S1) avec un contact de commutation actif, dans lequel n est un nombre entier supérieur à un.

4. Ventilateur de refroidissement selon la revendication 3, **caractérisé en ce que,** pour le fonctionnement individuel des n moteurs d'entraînement (13, 14; 13, 14, 22; 13, 14, 13', 14'), chaque fois un interrupteur réalisé en forme de contact à ouverture (S3; S3, S3'; S3, S3', S3") avec un contact de commutation positif est disposé dans n-1 branches électriques parallèles (18, 19; 18, 19, 23; 18, 19, 18', 19') en série avec le moteur d'entraînement (13, 14; 13, 14, 22; 13, 14, 13', 14').

5. Ventilateur de refroidissement selon la revendication 4, **caractérisé en ce que,** pour le montage en série des n moteurs d'entraînement (13, 14, 22) dans n-1 branches électriques parallèles (18, 19, 23), chaque fois un interrupteur réalisé en forme d'inverseur (S2, S2') avec deux contacts de commutation actifs est disposé sur le côté de raccordement du moteur d'entraînement (13, 22) situé à l'opposé du contact à ouverture (S3', S3), dont le premier contact de commutation est placé dans la branche électrique (18, 23) et dont le second contact de commutation est raccordé dans la liaison entre le contact à ouverture (S3', S3) et le moteur d'entraînement (22, 14) dans la branche électrique suivante (23, 19).

6. Ventilateur de refroidissement selon la revendication 5, **caractérisé en ce qu'**un seul inverseur (S2) est placé dans la première des n branches électriques parallèles (18) et un seul contact à ouverture (S3) est placé dans la dernière des branches électriques parallèles (19), dans lequel le premier est situé sur le côté à haut potentiel et l'autre est situé sur le côté à bas potentiel du moteur d'entraînement (13, 14) respectivement associé.

7. Ventilateur de refroidissement selon la revendication 4, **caractérisé en ce que,** pour le montage en série de chaque fois deux des n moteurs d'entraînement (13, 14, 13', 14') dans chaque branche électrique impaire (18, 18') comptée à partir du contact à fermeture (S1), un interrupteur réalisé en forme d'inverseur (S2, S2') avec deux contacts de commutation actifs est disposé sur le côté de raccordement du moteur d'entraînement (13, 13') situé à l'opposé du contact à ouverture (S3, S3', S3"), dont le premier contact de commutation est placé dans la branche électrique (18, 18') et dont le second contact de commutation est raccordé dans la liaison entre le contact à ouverture (S3, S3') et le moteur d'entraînement (14, 14') dans la branche électrique parallèle paire suivante (19, 19').

8. Ventilateur de refroidissement selon la revendication 1 ou 2, **caractérisé en ce que,** pour deux moteurs d'entraînement (13, 14) le circuit (10) comprend trois interrupteurs, dont un est réalisé en forme de contact à fermeture (S1), un en forme de contact à ouverture (S3) avec chaque fois un contact de commutation actif, et un en forme d'inverseur (S2) avec deux contacts de commutation actifs, **en ce que** les deux moteurs d'entraînement (13, 14) sont disposés dans deux branches électriques parallèles (18, 19) qui sont raccordées en commun à une source de tension (17) au moyen du contact à fermeture (S1), **en ce que** le contact à ouverture (S3) est monté en série avec un premier moteur d'entraînement (14) et l'inverseur (S2) est monté en série avec l'autre moteur d'entraînement (13) respectivement dans une des branches électriques parallèles (19, 18), dans lequel chaque fois un des deux interrupteurs est situé sur le côté à haut potentiel et l'autre est situé sur le côté à bas potentiel du moteur d'entraînement associé (14, 13), et **en ce que**, parmi les deux contacts de commutation de l'inverseur (S2), le premier est disposé dans la branche électrique (18) et le second est raccordé à la liaison entre le contact à ouverture (S3) et le moteur d'entraînement associé (14).

9. Ventilateur de refroidissement selon l'une quelconque des revendications 1 à 8, **caractérisé en ce qu'**il est prévu un appareil de commande (20), qui commande les interrupteurs (S1, S2, S3; S1, S2, S3, S2', S3'; S1, S2, S3, S2', S3', S3") selon un programme prédéterminé pour leur inversion, pour connecter et déconnecter les moteurs d'entraînement (13, 14; 13, 14, 22; 13, 13', 14, 14') et pour leur montage au choix en parallèle ou en série.

10. Ventilateur de refroidissement selon la revendication 9, **caractérisé en ce que,** lorsque les moteurs d'entraînement (13, 14; 13, 14, 22; 13, 14, 13', 14') sont déconnectés, le contact à fermeture (S1) occupe sa position d'ouverture et les contacts à ouverture (S3; S3, S3'; S3, S3', S3") occupent leur position de fermeture, et les inverseurs (S2; S2, S2'; S2, S2') sont commutés sur leurs premiers contacts de commutation.

11. Ventilateur de refroidissement selon la revendication 9 ou 10, **caractérisé en ce que,** lorsque l'on déconnecte les moteurs d'entraînement (13, 14; 13, 14, 22) se trouvant en fonctionnement en ouvrant le contact à fermeture (S1), les contacts à ouverture (S3; S3, S3'; S3, S3', S3") sont transférés dans leur position de fermeture et les inverseurs (S2; S2, S2'; S2, S2') sont temporairement commutés sur leurs seconds contacts de commutation.
